# EUROPEAN PATENT APPLICATION

(11) **EP 1 160 657 A2**
(43) Date of publication of application: **05.12.2001**
(21) Application number: 01304728.7
(22) Date of filing: 29.05.2001
(51) Int. Cl.: G06F 3/12

(54) **Printing control interface**

(30) Priority: 02.06.2000 US 587098
(71) Applicant: MATSUSHITA ELECTRIC INDUSTRIAL CO., LTD., Osaka 571 (JP)
(72) Inventor: Ma, Yue, West Windsor, New Jersey 08550 (US); Zhang, Yichun, Rochester, New York 14612 (US); Kanai, Junichi, East Windsor, New Jersey 08520 (US)
(74) Representative: Burrington, Alan Graham Headford

(57) **Abstract**

A printing control interface that allows a user to superimpose a customized print request option such as barcode, letterhead, and logo onto an original document while it is being printed. The printing control interface is independent of a user application that creates the document. The printing control interface is independent of document format and is print device independent.

## Description

### Technical Field

This invention relates to a printing control interface, and more particularly to a printing control interface that superimposes a customized print request option onto an original document while it is being printed.

### BACKGROUND OF THE INVENTION

The existing protocols in computer industry allow users to print documents in various sizes, such as business letter, business card, and special labels on a generic printer. However, adding a special symbol such as a letterhead, logo, or a barcode to a document can only be realized by either the application that creates the document or a special device. For example, a user may want to print a document on a company letterhead or print a document with a barcode inserted at the bottom of the page while the document is being printed. In the existing computer industry, in order to achieve this, one way is to have the document printed on a special letterhead stationery or stationery with barcode already printed on it. This requires the user to be aware of the placement of stationery in the printer tray to make sure the document is not printed upside down or on the reverse side of the paper.

Kodak makes a special device to insert variable information while the document is reproduced. There are also specialized barcode printers available. Adobe Acrobat software installs a button onto Microsoft Word or Excel Interface that allows a user to convert current Microsoft office documents into Adobe PDF format, which can be read/printed by Acrobat Reader software or modified by Acrobat Exchange software. This technology however only deals with limited Microsoft Office documents and Acrobat PDF.

Another way is to include the desired symbols within the document in the format of either document contents, or header/footers, or as special inserted objects and have them printed together with the document on a regular paper. This requires the application to be able to handle header/footer or inserting of symbols in a document and provide a mechanism to print these symbols. There are two disadvantages to this approach. First, the special symbols to be rendered only at printing process are not part of the contents of a document and therefore should not be attached to the document. Secondly, once the symbol is inserted into a document, it is very hard to change it from outside the application.

Prior approaches to managing the implementation of customized print request options to documents while they are being printed has met with limited success. In one approach disclosed in U.S. Patent No. 4,763,165, An Image Forming Apparatus with Image Adding Function, was depicted. A dedicated hardware device was described with an image adding function for modifying an original image with an additional image that was not a part of the original image. However, this only worked with special hardware to achieve a special goal.

In a different approach shown in U.S. Patent No. 5,013,895, Personal Postnet Barcode Printers, were described. The patent described a low-cost printer to print a ten digit Postnet barcode on an envelope at the time of mailing. With this scheme, the printing of Postnet barcode had to be done by this special device. Additionally, the zip code was entered into the printer manually and the generated barcode was printed after the envelope was prepared.

In yet another approach disclosed in U.S. Patent No. 5,528,734, A Printer Control System With Copier Type Document Handling, was depicted. The patent depicted the interception between a printer driver and a spooler in order to perform document handling tasks such as page grouping, page sorting and duplex copying. However, only document grouping features could be handled and the document contents could not be altered by superimposing a customized bitmap (symbol) into a printout. Additionally, the system worked directly with a printer driver by taking the signals from the computer driver, in which a signal was printer layout format dependent. The architect had to know the format of the particular printer and therefore was not flexible in coupling with adding new printers to the system in the future.

In yet another approach disclosed in U.S. Patent No. 5,742,879, a method and apparatus for reproducing documents with variable information was depicted. The patent depicted a special electrode-photographic reproduction device for optically reproducing information from an original document sheet together with electronically written additional information. Heretofore, this was another dedicated device.

In U.S. Patent No. 5,784,177, a printer/facsimile driver was described. The patent depicted an integrated printer/facsimile driver, particularly for a Canon GP55 Digital Copier. The dedicated printer/fax driver created a facsimile document and facsimile cover sheet which included the number of document sheets to be faxed, a bitmap logo, notes, and a bitmap signature. This was a dedicated printer/fax driver for a Cannon device.

In spite of the teachings of the above-mentioned patents, there is still a significant need for a printing interface that allows users to insert an add-on special symbol to any documents to be printed without dealing with the format of the document or the application that creates the document under current computer industry environment. The technology needs to operate with any applications and printer devices.

It is therefore a principle object of the present invention to provide a printing control interface that allows a user to superimpose a customized print request option such as a barcode, letterhead, and logo onto an original document while it is being printed. The interface will be independent of the user application that creates the document, independent of document format, and independent of a particular print device.

It is still another object of the present invention to provide a printing control interface that allows a user to insert dynamically changing information such as a document I,D, in the form of a barcode, time-stamped, onto a document while it is being printed.

### SUMMARY OF THE INVENTION

The present invention relates to a printing control interface that allows a user to superimpose a customized print request option such as a barcode, letterhead, and logo onto an original document while it is being printed. The interface is independent of a user application that creates the document, is independent of document format, and is print device independent. Both existing and new applications may be used as the original document.

In a preferred embodiment of the invention, the apparatus of the present invention includes a virtual printer driver which accepts print commands from a graphics device interface and forwards print requests to a destination device, most commonly the printer driver chosen by a particular application. A printer control panel interface is linked to the virtual printer driver and provides an interface to the user to configure the print control interface to a predetermined format. The virtual printer driver and printer control panel interface ensemble is intercepted between the graphics device interface and any user printer driver, where static bitmap or text string are overlaid onto the print job. An example of static bitmap can be a company logo which are stored previously on hard disk and loaded to the memory when printing control interface is enabled or when print job is being processed. An example of text string can be company letterhead or a document header etc.

In an alternative preferred embodiment, the apparatus of the present invention, the virtual printer driver and printer control panel interface as mentioned above with the addition of a dynamic bitmap/information generator for retrieving dynamic information, that is linked to the printer control panel interface. The bitmap/information generator generates a bitmap that changes each time the document is being printed. An example of such dynamic bitmap is a barcode for a unique document identification, or a time stamp indicating current printing time, or the name of the printer job sender etc.

### BRIEF DESCRIPTION OF THE DRAWINGS

The various advantages of the present invention will become apparent to one skilled in the art by reading the following specification and subjoined claims and by referencing the following drawings in which:

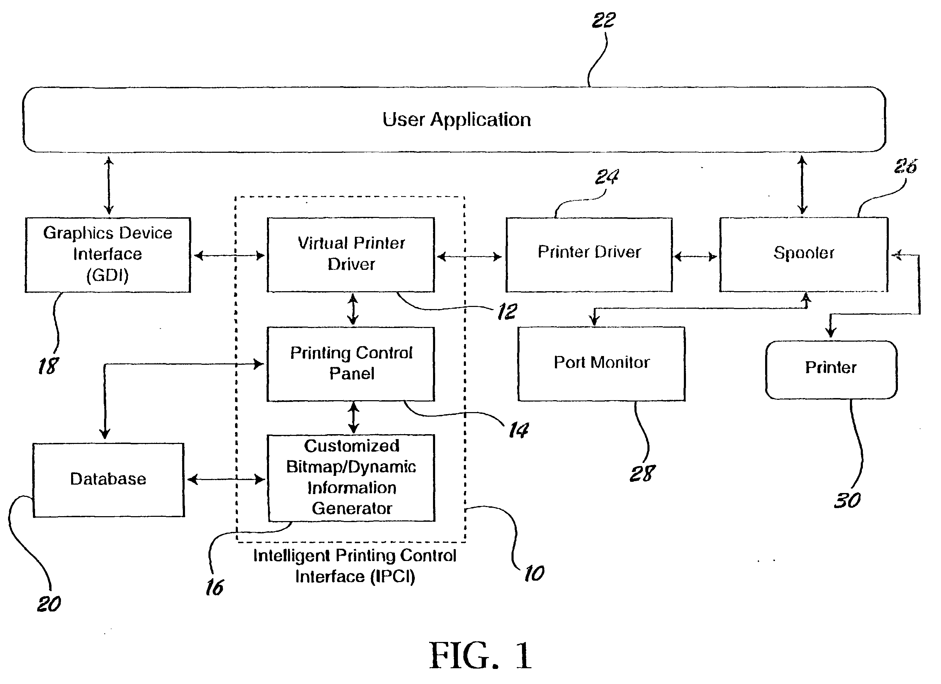

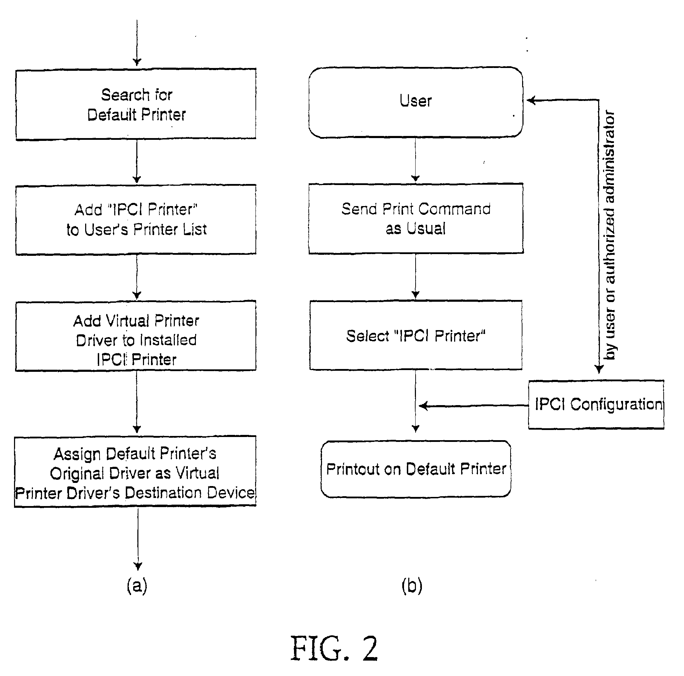

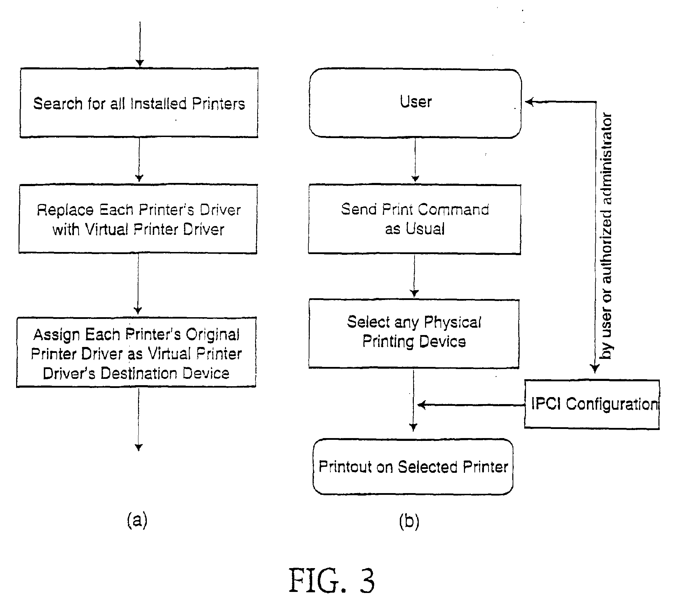

Figure 1 is a simplified perspective drawing of a printing control interface in accordance with a preferred embodiment of the present invention.

### DETAILED DESCRIPTION OF THE PREFERRED EMBODIMENT

In Figure 1 a printing control interface 10 is shown intercepted between an existing graphics device interface 18 and an existing printer driver 24. Most printing jobs in modem computer systems are done through the graphics device interface 18, the printer driver 24 and the spooler 26 as illustrated in Figure 1. The user application 22 creates a document and sends a request to print on a particular printer 30. The graphics device interface 18 is the intermediate support between the printer driver 24 and the user application 22. The graphics device interface 18 receives requests from various applications and sends these requests to the corresponding driver of the printer chosen by the application 22. The graphics device interface 18 is device independent while the printer driver 24 is device dependent. The aforementioned printing scheme allows a user application 22 to send device independent printing commands to render text and graphics. The printing commands are sent to the printer driver 24 via the graphics device interface 18. The printing device 30 receives the printing commands through the spooler 26. The spooler 26 manages the print jobs as well as allocates resources for printing from a central processing unit without interrupting what the user is currently doing.

Referring further to Figure 1, the printing control interface 10 includes a virtual printer driver 12, a printing control panel 14, and preferably a bitmap/information indicating that this bitmap/information generator is optional. The virtual printer driver 12 accepts the print commands from the graphics device interface 18 and communicates with the destination device, in this case, the printer driver 24. Additionally, the virtual printer driver 12 prepares new print commands to draw a customized bitmap and insert a special symbol to pass to the printer driver 24. The original document and superimposed customized bitmap graphics and special symbols are printed. A possible sequence of steps that the virtual printer driver 12 will follow when a print request is sent are loading the printer driver 24, getting the capabilities of the printer driver 24 passing the graphics device interface 18 information to the printer driver 24, preferably queuing the bitmap/information generator 16 to obtain a bitmap, and the rendering of the new bitmap into the current printing layout.

The printer control panel 14 provides to the user an interface to configure the behavior of the printing control interface 10 when it is desired. For example, a user may want to print a barcode on every page of the document or optionally on the first page only at the user's choice, or may want to disable barcode printing. Similarly, user may choose to enable/disable logo, time stamp, company letterhead printing or select desired location of symbol to print within a page. The linking of the printer control panel 14 to the virtual printer driver 12 includes a communication link to the user application 22 via a centralized document management database 20. (See Figure 1).

The bitmap/information generator 16 generates the bitmap of the barcode information to be inserted. Since the information may be a dynamic changing barcode containing a unique document I.D., it is preferably obtained from the centralized document management database 20. Other information such as a time-stamp that indicates the time the document is printed can also be generated by the bitmap/information generator 16 and added to the printing document via the printing control panel 14 and the virtual printer driver 12.

The printing control interface 10 may be installed on a computer system in two ways. Either way, the user will be able to print from any application with or without realizing the existence of the printing control interface 10 and the printing control interface 10 will be automatically invoked whenever a print request is sent. The first installation method is designated as the aware installation and is a procedure where the printers installed on a current system are searched and the default printer is captured as the printing output device of the printing control interface 10. At the same time, an entry of "printing control interface printer" is entered into the user's printer list. Table I(a) depicts this installation procedure. Table I(b) depicts the process of a print request. User may send a print command as usual. He may wish to select "printing control interface printer" as the printing device and the final print comes out of the default physical printer.

The other installation scheme is to make the printing control interface 10 "invisible" to the user. The scheme searches for all installed printers on the system and intercepts with printing control interface virtual printers designations. Table II(a) depicts this installation procedure. In the "aware installation" the user has to be aware of the existence of the printing control interface 10 and select "printing control interface printer" when sending a print request. In the second installation scheme designated as the "blind installation," the user does not have to be aware of the printing control interface 10 and can send a print request as usual. Table II(b) depicts the process of a print request. When a user sends a print request, she may select the physical printing device as its destination. The "printing control interface printer" 10 is automatically invoked.

Those skilled in the art can now appreciate from the foregoing description that the broad teachings of the present invention can be implemented in a variety of forms. Therefore, while this invention has been described in connection with particular examples thereof, the true scope of the invention should not be so limited since other modifications will become apparent to the skilled practitioner upon a study of the drawings, specification and following claims.

## Claims

1. A printing control interface that allows a user to superimpose a customized print request option such as barcode, letterhead, and logo onto an original document while it is being printed, is independent of a user application that creates the document, is independent of document format, and is print device independent, the printing control interface comprising:
a virtual printer driver which accepts print commands from a graphics device interface, the graphics device interface being an intermediate support device between a printer driver and the user application which receives requests from the application, and forwards the requests to a destination device, most commonly the printer driver chosen by the application; and
a printer control panel interface that is linked to the virtual printer driver and provides an interface to the user to configure the print control interface to a predetermined format.

2. The printing control interface according to claim 1, wherein a bitmap/information generator is linked to the printer control panel interface and generates a bitmap, the bitmap comprising a barcode for a unique document identification and other associated information, and other customized information such as pre-generated company logo, time stamp, and company letterhead.

3. The printing control interface according to claim 1, wherein the virtual printer driver forwards the requests to the designated driver by preparing new print commands to draw a customized bitmap and special symbol which are then superimposed onto the original document.

4. The printing control interface according to claim 1, wherein the linking of the printer control panel interface to the virtual printer driver further comprises a communication link to the user application via a centralized document management database.

5. The printing control interface according to claim 1, wherein the printer control interface panel comprises a customization page add-on to an existing printer user interface to configure the printing control interface format.

6. The printing control interface according to claim 4, wherein the printer control interface panel is invoked by a designated printer control interface printer.

7. The printing control interface according to claim 4, wherein the printer control interface panel is invoked by the existing printer user interface with the printer control interface installed.

8. The printing control interface according to claim 1, wherein the linking of the bitmap/information generator to the printer control panel interface further comprises a communication link to the user application via the centralized document management database.

9. A printing control interface that independent of a user source application, inserts a virtual printer service before a print request is sent to a destination device such as a printer driver of a designated printer, gathers and appends information without creating an intermediate document file to an original document, is independent of document format, is print device independent, and superimposes customized information such as a bitmap and text to the original document while it is being printed, the printing control interface comprising:
a virtual printer driver that is linked to an existing graphics device interface for communication to the printer driver;
a printer control panel interface that is linked to the virtual printer and configures the printing control interface to a predetermined format; and
a bitmap/information generator that is linked to the printer control panel to generate customized information such as the bitmap for a barcode, time stamp, and company letterhead.

10. The printing control interface according to claim 9, wherein the printer control interface panel further comprises an add-on property sheet to an existing printer user interface.

11. The printing control interface according to claim 9, wherein the virtual printer driver prepares and sends new print commands to the graphics device interface, and communicates with the printer driver thus drawing lines, curves, arcs, rectangles, and filling colors.

12. The printing control interface according to claim 9, wherein the bitmap/information generator further comprises a communication link to the user application via a centralized document management database.

13. A method of forming a printing control interface that allows a user to superimpose a customized bitmap to an original document while it is being printed, is independent of a user application that creates the document, is independent of document format, and is print device independent, the method comprising the steps of:
providing a virtual printer driver for accepting print commands from a graphics device; and
providing a printer control panel interface linking to the virtual printer driver and providing an interface to the user for configuring the printing control interface to a predetermined format.

14. The method of claim 13, wherein the method further comprises the step of providing a bitmap/information generator linking to the printer control panel interface and generating customized information such as a bitmap for a barcode, time stamp, and company letterhead.

15. The method of claim 12, wherein the method further comprises the step of inserting the printing control interface between the graphics device interface and the printer driver thus prompting customized printing onto any document and print onto any printer without knowing the user application.

16. The method of claim 12, wherein the step of inserting the printing control interface between the graphics device interface and the printer driver comprises the step of accepting existing and new applications.

17. The method of claim 12, wherein the step of inserting the printing control interface between the graphics device interface and the printer driver comprises the step of accepting new printers.
